# Europäisches Patentamt
# European Patent Office
# Office européen des brevets

(11) Publication number: **0 189 607**
**B1**

(12) **EUROPEAN PATENT SPECIFICATION**

(45) Date of publication of patent specification: **23.05.90**

(51) Int. Cl.⁵: **B 01 D 59/26**

(21) Application number: **85200129.6**

(22) Date of filing: **01.02.85**

(54) Method for the separation of hydrogen isotopes.

(43) Date of publication of application:
**06.08.86 Bulletin 86/32**

(45) Publication of the grant of the patent:
**23.05.90 Bulletin 90/21**

(84) Designated Contracting States:
**AT BE CH DE FR GB IT LI LU NL SE**

(56) References cited:

JOURNAL OF CHROMATOGRAPHY, vol. 29,
1967, pages 32-43, Amsterdam, NL; M.L. CONTI
et al.: "Separation of hydrogen isotopes by
gas-solid chromatograhy

PATENT ABSTRACTS OF JAPAN, vol. 4, no. 178
(C-34)660r, 10th December 1980; & JP - A - 55
119 427 (TOYO SODA KOGYO K.K.) 13-09-1980

(73) Proprietor: **EUROPEAN ATOMIC ENERGY
COMMUNITY (EURATOM)
Bâtiment Jean Monnet Plateau du Kirchberg
Boîte Postale 1907
L-2920 Luxembourg (LU)**

(72) Inventor: **Vansant, Etienne
Manderleylaan 6
B-2153 Zoersel (BE)**
Inventor: **Peeters, Guido
Anjelierstraat 1
B-2600 Antwerpen (BE)**
Inventor: **van Gompel, Remi
Grote Steenweg 146
B-2440 Geel (BE)**
Inventor: **De Bievre, Paul
Duineneind 11
B-2460 Kasterlee (BE)**

(74) Representative: **Smulders, Theodorus A.H.J., Ir.
et al
Vereenigde Octrooibureaux Nieuwe Parklaan
107
NL-2587 BP 's-Gravenhage (NL)**

Courier Press, Leamington Spa, England.

## Description

This invention relates to a method for the separation of the hydrogen isotopes by means of gas-solid chromatography on zeolite substrates. The hydrogen isotopes, including the ortho-para derivatives, have been separated on a variety of chromatographic columns. Most methods are based on adsorption at low temperature (77K) on solid substrates such as alumina, molecular sieves and silicagel. The separation of hydrogen, hydrogen deuteride and deuterium was reported by Smith and Hunt in J. Phys. Chem. *64*, 383 (1960) and in J. Phys. Chem. *65*, 87 (1961).

They used a 4 m chromia-alumina column at 77K with neon as the carrier gas. The $H_2$ peak eluted from the column in 50 min and $D_2$ in 133 min, then the column was partially deactivated with water. Partial deactivation can create problems in terms of column stability and reproducibility of the system. Still retention times are quite long.

Moore and Ward, J. Phys. Chem. *65* 832 (1960) obtained a good separation using an iron-coated alumina column of 4 m with He as the carrier gas. The hydrogen peak appears in 16 min and deuterium in 28 min. The separation was confirmed by the study of GF Shipman Anal. Chem. *34*, 877 (1962) and by the work of C. Genty and R. Schott, Anal. Chem. *42*, 7 (1970). The article by Shipman indicates a great impact of the packing preparation procedure on the properties of the column. The packing preparation is rather complicated and time consuming. The retention times decrease with use of the column.

M. Venygopalan and K. O. Kutschke Can. & Chem. *41*, 548 (1963) used a strongly activated alumina column for the analysis of micromol quantities of the hydrogen isotopes. The packing was activated for 1 week at 723K in a flow of He.

M. L. Conti and M. Lesimple (J. Chromatogr. *29*, 32 (1967)) studied the use of i.a. mordenite and molecular sieve 4A in the static adsorption of hydrogen isotopes. On the basis of the results, they came to the conclusion, that the molecular sieves 4A shows the best selection capacity for hydrogen istopes, with respect to other absor-bants, including mordenites.

The object of the present invention is to provide a method for an efficient separation of hydrogen isotopes.

According to the invention a method for the separation of hydrogen isotopes from each other by means of gas-solid chromatography, using a chromatography column containing a solid packing material, is characterized in that Na-mordenite is used as solid packing material in the chromatography column.

The packing preparation of the columns is easy and reproducible. The packing can easily be regenerated and the retention times are short, operating at higher temperatures, preferably 120—250K, more in particular 197K. Preferably Na-mordenite having a particle size of between 100 and 300 μm is used.

The Na-mordenite was crushed, sieved and the fraction 80—100 mesh (150—180 μm) used to fill a 2 m copper column 2,2 mm ID. Special care was taken in the filling procedure to obtain a closed, uniform packing. The column ends were scaled with a plug of DMCS-(dimethylchlorosilane)-treated glass wool. After fitting, the column was conditioned at 400°C in the oven of the chromatograph with a moderate flow of He. The columns were connected to the instrument so that they could be inserted alternately in the oven for the thermal treatment and in an external Dewar with liquid nitrogen or dry ice-aceton mixture for the analytical path, avoiding any contamination with air.

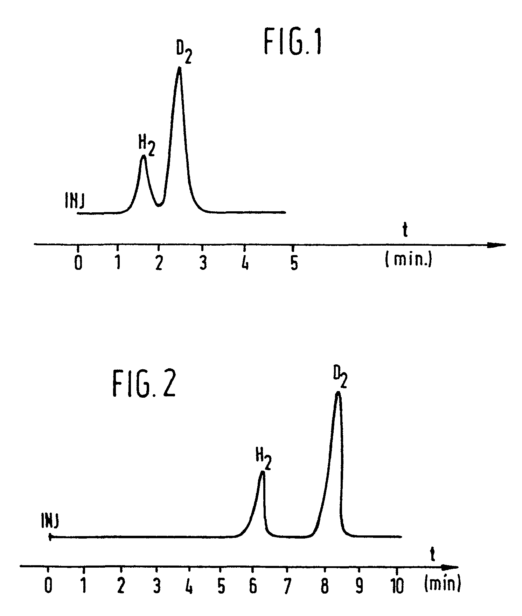

The gas chromatograph was a "Varian" model 1420 with thermal conductivity detector. Helium was used as the carrier gas at a flow rate of 30 ml $min^{-1}$. A synthetic mixture of 1 vol.% $H_2$ and 1 vol.% $D_2$ in He balance was injected by means of a gas injection valve with a sample loop of 1 ml. A typical chromatogram (column temperature $-76°C$) is shown in Fig. 1. TCD bridge current 375 mA.

In Fig. 2 a typical chromatogram (column temperature $-120°C$) is shown, using the same mixture and, apart from the column temperature, the same conditions.

When the column was operated at liquid nitrogen temperature both hydrogen and deuterium are adsorbed. Depending on the column temperature ($-76°C$ to $-130°C$) the resolution

$$R_S = 2 \; \frac{{}^tR_2 - {}^tR_1}{w_1 + w_2},$$

where
${}^tR_2, \; {}^tR_2 =$ retention times (injection measurements),
$w_1, w_2$: widths at the base of the peaks 1 and 2 varied between 1.3 and 1.67.

The separation factor S.F.

$$(= \frac{{}^tR_2)}{{}^tR_1}$$

in this temperature range increased from 1.14 to 1.32.

## Claims

1. Method for the separation of hydrogen isotopes from each other by means of gas-solid chromatography, using a chromatography column containing a solid packing material, characterized in that Na-mordenite is used as solid packing material in the chromatography column.

2. Method according to claim 1, characterized in that the particle size of the mordenite lies between 100 and 300 μm.

3. Method according to claim 1 or 2, characterized in that as a carrier gas He is used.

4. Method according to claims 1—3, characterized in that the hydrogen isotopes comprises hydrogen, hydrogen deuteride and deuterium.

5. Method according to claims 1—4 characterized in that the temperature used is from 120—250K.

**Patentansprüche**

1. Verfahren zur Trennung von Wasserstoffisotopen voneinander mittels Gas-Flüssig-Chromatographie, unter Verwendung einer Chromatographie-Säule, die ein festes Packungsmaterial enthält, dadurch gekennzeichnet, daß Na-Mordenit als festes Packungsmaterial in der Chromatographie Säule Verwendung findet.

2. Verfahren nach Anspruch 1, dadurch gekennzeichnet, daß die Teilchengröße des Mordenits zwischen 100 und 300 μm liegt.

3. Verfahren nach Anspruch 1 oder 2, dadurch gekennzeichnet, daß als Trägergas He Verwendung findet.

4. Verfahren nach den Ansprüchen 1 bis 3, dadurch gekennzeichnet, daß die Wasserstoffisotope Wasserstoff, Wasserstoff-Deuterid und Deuterium umfassen.

5. Verfahren nach den Ansprüchen 1 bis 4, dadurch gekennzeichnet, daß eine Temperatur von 120—250°K verwendet wird.

**Revendications**

1. Procédé pour séparer les uns des autres des isotopes de l'hydrogène par chromatographie gaz-solide, à l'aide d'une colonne de chromatographie contenant un matériau de garnissage solide, caractérisé par le fait qu'on utilise de la Na-mordénite comme matériau de garnissage solide de la colonne de chromatographie.

2. Procédé selon la revendication 1, caractérisé par le fait que la dimension de particule de la mordénite se situe entre 100 et 300 μm.

3. Procédé selon la revendication 1 ou 2, caractérisé par le fait qu'on utilise He comme gaz porteur.

4. Procédé selon l'une des revendications 1 à 3, caractérisé par le fait que les isotopes de l'hydrogène comprennent l'hydrogène, le deutérieure d'hydrogène et le detérium.

5. Procédé selon l'une des revendications 1 à 4, caractérisé par le fait que la température utilisée est de 120—250K.

EP 0 189 607 B1

FIG.1

FIG.2